# EUROPEAN PATENT APPLICATION

(11) **EP 4 316 316 A1**
(43) Date of publication of application: **07.02.2024**
(21) Application number: 21934619.4
(22) Date of filing: 01.12.2021
(51) Int. Cl.: A47J 31/24, A47J 31/44

(54) **COFFEE MACHINE AND WORKING METHOD THEREFOR**

(30) Priority: 30.03.2021 CN 202110339199
(71) Applicant: Zhuhai Hengqin Xinrun Intelligent Manufacturing Co., Ltd., Zhuhai, Guangdong 519031 (CN)
(72) Inventor: CHEN, Xiaolin, Zhuhai, Guangdong 519085 (CN); CHENG, Tao, Zhuhai, Guangdong 519085 (CN)
(74) Representative: Murgitroyd & Company
(86) International application number: PCT/CN2021/134793
(87) International publication number: WO 2022/205983

(57) **Abstract**

Disclosed are a coffee machine and a working method therefor. The coffee machine comprises a housing, a water supply mechanism, an instant heating mechanism, a temperature control device and a coffee extraction mechanism, wherein the water supply mechanism, the instant heating mechanism, the temperature control device and the coffee extraction mechanism are all installed inside the housing; the instant heating mechanism comprises a water input portion and a water output portion, and by means of a water conveying pipe, the water input portion is connected to the water supply mechanism and the water output portion is connected to the coffee extraction mechanism; and the temperature control device measures the water temperature of the water output portion. The coffee machine is highly efficient in making coffee, prevents consumers from waiting for a long time, and can better meet requirements of the consumers, such that the consumption experience is improved.

## Description

### TECHNICAL FIELD

The present invention relates to the technical field of coffee machines, in particular to a coffee machine and a working method thereof.

### BACKGROUND

Conventional machines for making coffee using coffee pad on the market utilize a boiler for heating. Every time the machine is started, the boiler needs to be turned on first to be heated, and then the coffee can be made after the boiler is preheated. However, the boiler is heated slowly and the entire making process is cumbersome, which affects the efficiency of the making coffee, and also causes consumers to wait for a long time, affecting the consumption experience, affecting the consumption experience.

### SUMMARY

The object of the present invention is to provide a coffee machine and a working method thereof. The coffee machine has a high efficiency in making coffee, prevents consumers from waiting for a long time, can better meet the requirements of consumers, and improves the consumption experience.

The technical solution is as follows.

A coffee machine includes a housing, a water supply mechanism, an instant heating mechanism, a temperature control device, and a coffee extraction mechanism. The water supply mechanism, the instant heating mechanism, the temperature control device and the coffee extraction mechanism are mounted in the housing. The instant heating mechanism includes a water inlet portion and a water outlet portion. The water inlet portion is connected to the water supply mechanism through a water delivery pipe, the water outlet portion is connected to the coffee extraction mechanism through a water delivery pipe. The temperature control device is configured to detect a water temperature of the water outlet portion.

In one of the embodiments, the instant heating mechanism includes an electric heating pipe, a heating water pipe, and a thermal conduction sleeve. The electric heating pipe and the heating water pipe are both provided on the thermal conduction sleeve. The water inlet portion is located at an end of the heating water pipe. The water outlet portion is located at another end of the heating water pipe.

In one of the embodiments, a control circuit is further included. The electric heating pipe is provided with a first connection end and a second connection end. The temperature control device is electrically connected to a control circuit. The first connection end and/or the second connection end are electrically connected to the control circuit.

In one of the embodiments, the thermal conduction sleeve is arranged in a U-shape, and the electric heating pipe is arranged corresponding to the heating water pipe.

In one of the embodiments, the coffee extraction mechanism includes a cover assembly, and a support base. The cover assembly includes an upper cover and a mounting plate. The mounting plate is rotatably connected to the support base. The upper cover is mounted on a side of the mounting plate adjacent to the support base. A coffee extraction portion is formed between the support base and the upper cover. The upper cover is provided with a water feeding portion, the water feeding portion is connected to the water outlet portion of the heating water pipe, and a water outlet of the water feeding portion is located on a side of the upper cover adjacent to the coffee extraction portion.

In one of the embodiments, the coffee extraction mechanism further includes a coffee container configured to hold coffee pad. The coffee container is adapted to the coffee extraction portion. A sealing ring is provided between the upper cover and the coffee container, and the sealing ring is arranged corresponding to an edge of the coffee container.

In one of the embodiments, the cover assembly further includes a pressing block and a rotation locking disk. The upper cover is provided with a guide column arranged longitudinally, and the guide column extends through the rotation locking disk, the mounting plate and the pressing block successively. The pressing block is in sliding fit with the guide column. The rotation locking disk is provided with a guide connection position arranged obliquely. A side wall of the pressing block is provided with a connection block that is adapted to the guide connection position. The connection block is in sliding fit with the guide connection position. A side wall of the rotation locking disk is provided with a locking block, and the support base is provided with a locking groove adapted to the locking block.

In one of the embodiments, the water supply mechanism includes a water storage tank and a water pump. The water storage tank is connected to a water inlet of the water pump, and a water outlet of the water pump is connected to the water inlet portion of the instant heating mechanism.

In one of the embodiments, a control circuit is further included, and the water pump is electrically connected to the control circuit.

A working method of a coffee machine, comprising the following steps:
powering on the coffee machine, starting a water supply mechanism, and delivering by the water supply mechanism, water to a water inlet portion of an instant heating mechanism through a water delivery pipe;
enabling the water to enter the instant heating mechanism from the water inlet portion, and starting the instant heating mechanism and heating the water quickly to a preset temperature;
delivering the heated water from the water outlet portion of a heating type heating mechanism to a coffee extraction mechanism through the water delivery pipe, when a temperature control device detects that the water temperature of a water outlet portion reaches a preset temperature; and
enabling the heated water to enter the coffee extraction mechanism to extract coffee.

According to the coffee machine provided by the present invention, the instant heating mechanism is provided to quickly heat the water delivered by the water supply mechanism, and the heated water is delivered to the coffee extraction mechanism to extract coffee juice. The entire coffee making process takes a shorter time, and the operation is simpler. Tedious steps such as preheating and the like are omitted, which can effectively improve the efficiency of making coffee, avoid consumers waiting for a long time, and improve the consumption experience. In addition, as the coffee extracted at different water temperatures has different effects, the water temperature is controlled by providing the temperature control device, the coffee with different effects can be made to better meet the different requirements of consumers.

### BRIEF DESCRIPTION OF THE DRAWINGS

The accompanying drawings herein show specific examples of the technical solution of the present invention, and form part of the specification with the specific embodiments, which is used to explain the technical solution, principle and effect of the present invention.

Unless otherwise specified or otherwise defined, the same reference numerals in different drawings represent the same or similar technical features, and different reference numerals may be used to represent the same or similar technical features.
FIG. 1 is an exploded view of a coffee machine according to an embodiment of the present invention.
FIG. 2 is a cross-sectional view of the coffee machine according to an embodiment of the present invention.
FIG. 3 is an exploded view of a coffee extraction mechanism according to an embodiment of the present invention.

### Description of reference signs:

10. housing; 20. temperature control device; 30. electric heating pipe; 301. first connection end; 302. second connection end; 31. heating water pipe; 311. water inlet portion; 312. water outlet portion; 32. thermal conduction sleeve; 33. instant heating mechanism; 40. upper cover; 401. water feeding portion; 402. guide column; 41. mounting plate; 42. support base; 421. locking groove; 43. coffee container; 431. coffee extraction portion; 44. sealing ring; 45. operation plate; 46. pressing block; 461. connection block; 47. rotation locking disk; 471. guide connection position; 472. locking block; 48. case; 49. coffee extraction mechanism; 50. water storage tank; 51. water pump; 52. water delivery pipe.

### DETAILED DESCRIPTION OF THE EMBODIMENTS

In order to facilitate understanding of the present invention, specific embodiments of the present invention will be described more fully below with reference to the accompanying drawings.

Unless otherwise specified or defined, all technical and scientific terms used herein have the same meaning as commonly understood by one of ordinary skill in the art. In the case of combining the actual scene of the technical solution of the present invention, all technical and scientific terms used herein may also have meanings corresponding to the purpose of achieving the technical solution of the present invention.

Unless otherwise specified or otherwise defined, the terms "first, second..." as used herein are used only to distinguish to distinguish the names, and does not represent a specific quantity or order.

Unless otherwise specified or otherwise defined, the term "and/or" includes any and all combinations of one or more of the associated listed items.

It should be noted that when an element is called "fixed to" another element, it may be directly fixed to another element or there may be intermediate elements. When an element is considered to be "connected to" another element, it may be directly connected to another element or intervening elements may also be present. When an element is considered to be "mounted to" another element, it may be directly mounted to another element or intervening elements may also be present. When an element is considered to be "provided on" another element, it may be directly disposed on another element or intervening elements may also be present.

Unless specifically stated or otherwise defined, the "said" and "the" used herein relate to the aforementioned technical feature or the technical content, the technical feature or technical content may be the same as or similar to the aforementioned technical feature or technical content.

It should be understood that technical contents or technical features that go against the purpose of the present invention, or are obviously contradictory, should be excluded.

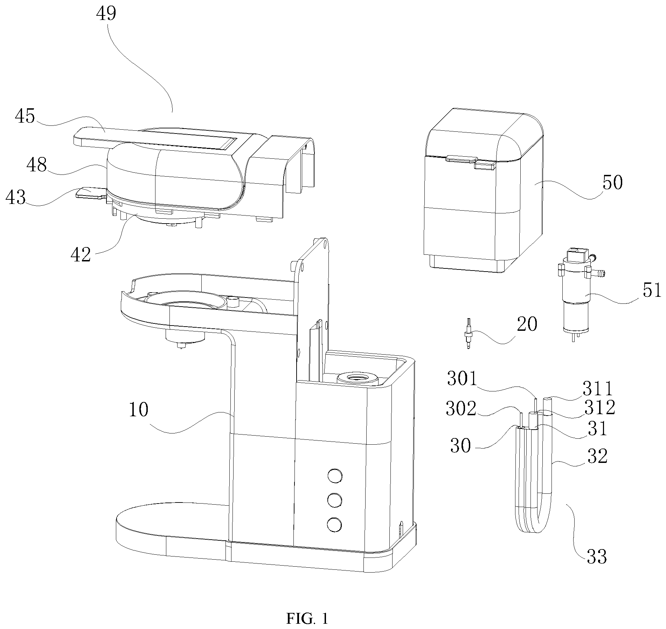

As shown in FIGS. 1 to 3, a coffee machine includes a housing 10, a water supply mechanism, an instant heating mechanism 33, a temperature control device 20, and a coffee extraction mechanism 49. The water supply mechanism, the instant heating mechanism 33, the temperature control device 20 and the coffee extraction mechanism 49 are mounted in the housing 10. The instant heating mechanism 33 includes a water inlet portion 311 and a water outlet portion 312. The water inlet portion 311 is connected to the water supply mechanism, and the water outlet portion 312 is connected to the coffee extraction mechanism 49 through water delivery pipes 52. The temperature control device 20 detects a water temperature of the water outlet portion 312 and controls the operation of the instant heating mechanism 33. Through the above arrangement, the instant heating mechanism 33 can quickly heat the water delivered from the water supply mechanism. The heated water is delivered from the water outlet portion 312 to the coffee extraction mechanism 49 to brew a coffee pad and extract coffee juice. The entire coffee making process takes a shorter time, and the operation is simpler. Tedious steps such as preheating and the like are omitted, which can effectively improve the efficiency of making coffee, avoid consumers waiting for a long time, and improve the consumption experience. As the coffee extracted at different water temperatures has different effects, the water temperature is controlled by providing the temperature control device 20, the coffee with different effects can be made to better meet the different requirements of consumers. At the same time, the stability of the water temperature helps to keep a consistent coffee extraction rate. In addition, since the water outlet portion 312 of the instant heating mechanism 33 is connected to the coffee extraction mechanism 49, the temperature control device 20 directly detects the water temperature of the water outlet portion 312 to ensure the accuracy of the temperature of the hot water for coffee extraction, which is beneficial to improving the coffee extraction effect.

The instant heating mechanism 33 includes an electric heating pipe 30, a heating water pipe 31, and a thermal conduction sleeve 32. The electric heating pipe 30 and the heating water pipe 31 are both provided on the thermal conduction sleeve 32. The water inlet portion 311 is located at an end of the heating water pipe 31, and the water outlet portion 312 is located at another end of the heating water pipe 31. Since the electric heating pipe 30 has a high thermal efficiency and a fast heating speed, the water delivered by the water supply mechanism enters the heating water pipe 31, the electric heating pipe 30 is heated to a preset temperature in a shorter time, and the electric heating pipe 30 conducts heat to the heating water pipe 31 through the thermal conduction sleeve 32, so as to rapidly heat the water. The use of the electric heating pipe 30 not only can achieve rapid heating, but also is more convenient and simpler to be mounted and maintain. It should be noted that the heating water pipe 31 and the thermal conduction sleeve 32 are integrally formed or mounted separately.

A control circuit (not shown) is further included. The electric heating pipe 30 is provided with a first connection end 301 and a second connection end 302. The temperature control device 20 is electrically connected to a control circuit. In the embodiment, the temperature control device 20 is a negative temperature coefficient (NTC) thermistor. The electric heating pipe 30 is electrically connected to the control circuit through the first connection end 301 and the second connection end 302. It should be noted the connection between the electric heating pipe 30 and the control circuit is not limited herein, as long as the operation of the electric heating pipe 30 can be controlled. The control and adjustment of the control circuit are configured through a software program. Through the above arrangement, the temperature control device 20 sends the measured temperature information to the control circuit. The control circuit controls the power-on and power-off of the first connection end 301 and the second connection end 302 according to a preset control process, so as to control the operation of the electric heating pipe 30. In addition, a heating temperature of the electric heating pipe 30 can be adjusted through the control circuit, so as to realize the function of adjusting the temperature of the water.

The thermal conduction sleeve 32 is arranged in a U-shape, and the electric heating pipe 30 is arranged corresponding to the heating water pipe 31. The U-shaped arrangement of the thermal conduction sleeve 32 can save mounting space, facilitate mounting, and can also ensure a design length of the electric heating pipe 30. The corresponding arrangement of the electric heating pipe 30 and the heating water pipe 31 can improve the heating effect. It should be noted that the U-shaped arrangement of the thermal conduction sleeve 32 is only a preferred embodiment of the present utility model. In other embodiments, the heat-conducting sleeve 32 may also be arranged in an S-shape or L-shape to meet the mounting requirements of different coffee machines, need.

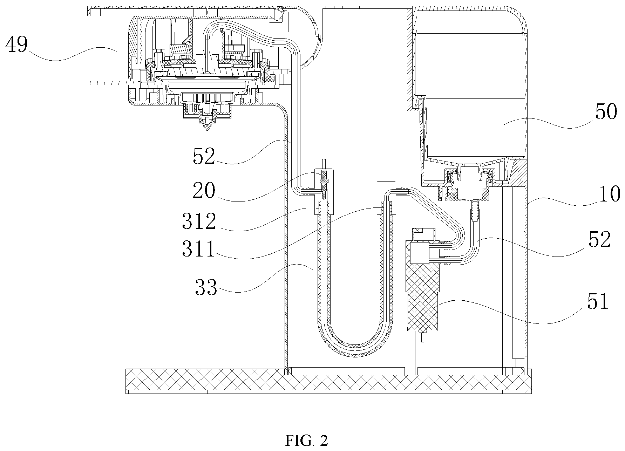

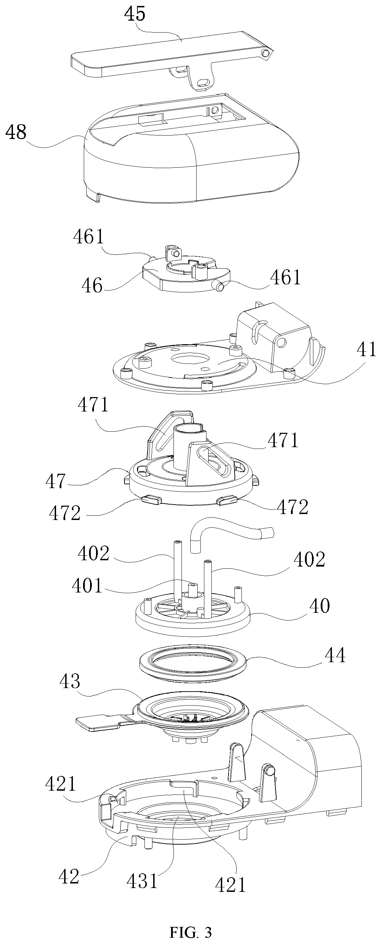

As shown in FIGS. 2 and 3, the coffee extraction mechanism 49 includes a case 48, a cover assembly, and a support base 42. The cover assembly is mounted in the case 48, and the cover assembly includes an upper cover 40 and a mounting plate 41. The mounting plate 41 is rotatably connected to the support base 42. The upper cover 40 is mounted on a side of the mounting plate 41 adjacent to the support base 42. A coffee extraction portion 431 is formed between the support base 42 and the upper cover 40. The upper cover 40 is provided with a water feeding portion 401. The water feeding portion 401 is connected to the water outlet portion 312 of the heating water pipe 31. A water outlet of the water feeding portion 401 is located on a side of the upper cover 40 adjacent to the coffee extraction portion 431. Through the above arrangement, the heated water is delivered from the water outlet portion 312 of the heating water pipe 31 to the water feeding portion 401 of the upper cover 40, and enters the coffee extraction portion 431 from the water outlet of the water feeding portion 401, thereby realizing the connection between the instant heating mechanism 33 and the coffee extraction mechanism 49.

The coffee extraction mechanism 49 further includes a coffee container 43 configured to hold coffee pad. The coffee container 43 is adapted to the coffee extraction portion 431. A sealing ring 44 is provided between the upper cover 40 and the coffee container 43, and the sealing ring 44 is arranged corresponding to an edge of the coffee container 43. After the coffee container 43 is placed in the coffee extraction portion 431, the coffee pad is placed in the coffee container 43. Hot water enters the coffee extraction portion 431 to extract the coffee. The sealing ring 44 is provided to improve the air tightness between the upper cover 40 and the edge of the coffee container 43, so as to prevent hot water from leaking from a gap in front of the upper cover 40 and the coffee container 43 to reduce the extraction effect.

The cover assembly further includes an operation plate 45, a pressing block 46, and a rotation locking disk 47. The operation plate 45 is connected to the pressing block 46. The upper cover 40 is provided with a guide column 402 arranged longitudinally. The guide column 402 extends through the rotation locking disk 47, the mounting plate 41, and the pressing block 46 successively, and the pressing block 46 is in sliding fit with the guide column 402. The rotation locking disk 47 is provided with a guide connection position 471 arranged obliquely. A side wall of the pressing block 46 is provided with a connection block 461 that is adapted to the guide connection position 471. The connection block 461 is in sliding fit with the guide connection position 471. A side wall of the rotation locking disk 47 is provided with a locking block 472. The support base 42 is provided with a locking groove 421 adapted to the locking block 472. The pressing block 46 can be driven by moving the operation plate 45, and the pressing block 46 moves up and down along the guide column 402 under the guidance of the longitudinally arranged guide column 402. During moving, the pressing block 46 exerts a force on the rotation locking disk 47. Under the action of the inclined guide connection position 471, the rotation locking disk 47 can be driven to rotate by a certain angle, and the locking block 472 on the rotation locking disk 47 and the locking groove 421 on the support base 42 are mutually engaged or misaligned, thereby achieving locking and unlocking functions. When locking is achieved, the rotation locking disk 47 is subjected to downward pressure from the pressing block 46, and at the same time, the upper cover 40 also subjected to downward pressure, so that the upper cover 40 tightly presses the coffee container 43 to further improve the extraction effect. In addition, since the mounting plate 41 is rotatably connected to the support base 42, when the operation plate 45 is lifted, the pressing block 46 moves upward to an extreme position of the guide connection position 471, the rotation locking disk 47 is driven to move upward, and then the mounting plate 41 is driven to rotate, which is convenient for taking and placing the coffee container 43, and also more convenient for taking and placing the coffee pad.

The water supply mechanism includes a water storage tank 50 and a water pump 51. The water storage tank 50 is connected to a water inlet of the water pump 51 through the water delivery pipe 52. A water outlet of the water pump 51 is connected to the water inlet portion 311 of the heating water pipe 31 through the water delivery pipe 52. The water pump 51 pumps water from the water storage tank 50 into the water pump 51 through the water inlet, and then the water is delivered to the heating water pipe 31 through the water outlet, so as to realize a water supply function.

The water pump 51 is electrically connected to the control circuit. Since the effects of coffee extracted by different water pressures will be different, by controlling the water pressure of the water pump 51 through the control circuit, coffee with different effects can be made to further meet the requirements of consumers.

The present invention further provides a working method of a coffee machine, including the following steps.

The coffee machine is powered on, the water pump 51 is started, the water pump 51 pumps the water in the water storage tank 50, and the water pump 51 delivers water to the water inlet portion 311 of the heating water pipe 31.

Water enters the heating water pipe 31 from the water inlet portion 311, and the electric heating pipe 30 works and is rapidly heated. The electric heating pipe 30 conducts heat to the heating water pipe 31 through the thermal conduction sleeve 32, thereby realizing rapid heating of the water;

The temperature control device 20 detects the water temperature of the water outlet portion 312 of the heating water pipe 31, and sends the measured temperature information to the control circuit. When the water temperature reaches the preset temperature, the temperature control device 20 controls the electric heating pipe 30 to stop working, so as to control the water temperature.

The heated water is delivered from the water outlet portion 312 of the heating water pipe 31 to the water feeding portion 401 of the upper cover 40, and enters the coffee extraction portion 431 from the water outlet of the water feeding portion 401 to brew coffee pad and extract coffee.

Through the above method, coffee can be quickly extracted, and the method is simple to operate, tedious steps such as preheating and the like are omitted, which can effectively improve the efficiency of making coffee. At the same time, through providing the temperature control device 20 to control the water temperature, the coffee with different effects can be made to better meet the different requirements of consumers.

The coffee machine provided by the present invention adopts the electric heating pipe 30 as a heating element of the instant heating mechanism 33, which can quickly heat the water. The heated water is delivered from the water outlet portion 312 to the coffee extraction mechanism 49 for brewing coffee pad, so that the coffee juice can be extracted. The entire coffee making process takes a shorter time and is simpler to operate. Tedious steps such as preheating and the like are omitted, which can effectively improve the efficiency of making coffee, avoid consumers waiting for a long time, and improve the consumption experience. As the coffee extracted by brewing the coffee pad with different water temperatures and water pressures has different effects, coffee with different effects can be made by controlling the water temperature and the water pressure, which can better meet the different requirements of consumers. At the same time, the stability of the water temperature helps to keep a consistent coffee extraction rate. In addition, the temperature control device 20 directly detects the water temperature of the water outlet portion 312 to ensure the accuracy of the temperature of the hot water for coffee extraction, which is beneficial to improving the coffee extraction effect.

The purpose of the above embodiments is to reproduce and deduce the technical solution of the present invention as an example, and to fully describe the technical solution, purpose and effect of the present invention, and to enable the public to understand the present invention more thoroughly, comprehensive, and does not limit the scope of protection of the present invention.

The above embodiments are not exhaustive enumerations based on the present invention, and there may be many other implementation manners not listed here. Any replacement and improvement made on the basis of not violating the concept of the present invention are within the protection scope of the present invention.

## Claims

1. A coffee machine comprising a housing, a water supply mechanism, an instant heating mechanism, a temperature control device, and a coffee extraction mechanism, wherein the water supply mechanism, the instant heating mechanism, the temperature control device, and the coffee extraction mechanism are mounted in the housing, the instant heating mechanism comprises a water inlet portion and a water outlet portion, the water inlet portion is connected to the water supply mechanism through a water delivery pipe, the water outlet portion is connected to the coffee extraction mechanism through a water delivery pipe, and the temperature control device is configured to detect a water temperature of the water outlet portion.

2. The coffee machine according to claim 1, wherein the instant heating mechanism comprises an electric heating pipe, a heating water pipe, and a thermal conduction sleeve, the electric heating pipe and the heating water pipe are both provided on the thermal conduction sleeve, the water inlet portion is located at an end of the heating water pipe, and the water outlet portion is located at another end of the heating water pipe.

3. The coffee machine according to claim 2, further comprising a control circuit, wherein the electric heating pipe is provided with a first connection end and a second connection end, the temperature control device is electrically connected to a control circuit, and the first connection end and/or the second connection end are electrically connected to the control circuit.

4. The coffee machine according to claim 2, wherein the thermal conduction sleeve is arranged in a U-shape, and the electric heating pipe is arranged corresponding to the heating water pipe.

5. The coffee machine according to claim 1, wherein the coffee extraction mechanism comprises a cover assembly and a support base, the cover assembly comprises an upper cover and a mounting plate, the mounting plate is rotatably connected to the support base, the upper cover is mounted on a side of the mounting plate adjacent to the support base, a coffee extraction portion is formed between the support base and the upper cover, the upper cover is provided with a water feeding portion, the water feeding portion is connected to the water outlet portion of the heating water pipe, and a water outlet of the water feeding portion is located on a side of the upper cover adjacent to the coffee extraction portion.

6. The coffee machine according to claim 5, wherein the coffee extraction mechanism further comprises a coffee container configured to hold coffee pad, the coffee container is adapted to the coffee extraction portion, a sealing ring is provided between the upper cover and the coffee container, and the sealing ring is arranged corresponding to an edge of the coffee container.

7. The coffee machine according to claim 6, wherein the cover assembly further comprises a pressing block and a rotation locking disk, the upper cover is provided with a guide column arranged longitudinally, the guide column extends through the rotation locking disk, the mounting plate, and the pressing block successively, the pressing block is in sliding fit with the guide column, the rotation locking disk is provided with a guide connection position arranged obliquely, a side wall of the pressing block is provided with a connection block adapted to the guide connection position, the connection block is in sliding fit with the guide connection position, a side wall of the rotation locking disk is provided with a locking block, and the support base is provided with a locking groove adapted to the locking block.

8. The coffee machine according to claim 1, wherein the water supply mechanism comprises a water storage tank and a water pump, the water storage tank is connected to a water inlet of the water pump, and a water outlet of the water pump is connected to the water inlet portion of the instant heating mechanism.

9. The coffee machine according to claim 8, further comprise a control circuit, wherein the water pump is electrically connected to the control circuit.

10. A working method of a coffee machine, comprising the following steps:
powering on the coffee machine, starting a water supply mechanism, and delivering, by the water supply mechanism, water to a water inlet portion of an instant heating mechanism through a water delivery pipe;
enabling the water to enter the instant heating mechanism from the water inlet portion, and starting the instant heating mechanism and heating the water quickly to a preset temperature; delivering the heated water from the water outlet portion of a heating type heating mechanism to a coffee extraction mechanism through the water delivery pipe, when a temperature control device detects that the water temperature of a water outlet portion reaches a preset temperature; and
enabling the heated water to enter the coffee extraction mechanism to extract coffee.
